(19) Europäisches Patentamt
European Patent Office
Office européen des brevets

(11) **EP 1 391 751 B1**

(12) **EUROPÄISCHE PATENTSCHRIFT**

(45) Veröffentlichungstag und Bekanntmachung des Hinweises auf die Patenterteilung:
**13.08.2008 Patentblatt 2008/33**

(51) Int Cl.:
*G01V 3/06* (2006.01)    *G01N 27/20* (2006.01)

(21) Anmeldenummer: **03017321.5**

(22) Anmeldetag: **31.07.2003**

(54) **Verfahren und Vorrichtung zur schnellen tomographischen Messung der elektrischen Leitfähigkeitsverteilung in einer Probe**

Method and device for fast tomographic measurement of electrical conductivity distribution within a sample

Procédé et dispositif pour la mesure tomographique rapide de la distribution de la conductivité électrique dans un échantillon

(84) Benannte Vertragsstaaten:
**AT BE BG CH CY CZ DE DK EE ES FI FR GB GR HU IE IT LI LU MC NL PT RO SE SI SK TR**

(30) Priorität: **23.08.2002 DE 10238824**

(43) Veröffentlichungstag der Anmeldung:
**25.02.2004 Patentblatt 2004/09**

(73) Patentinhaber: **Forschungszentrum Jülich GmbH 52425 Jülich (DE)**

(72) Erfinder:
• **Zimmermann, Egon**
**52459 Inden-Altdorf (DE)**
• **Glaas, Walter**
**50189 Elsdorf (DE)**
• **Verweerd, Arre**
**52070 Aachen (DE)**
• **Tillmann, Axel, Dr.**
**52457 Aldenhoven (DE)**
• **Kemna, Andreas, Dr.**
**40221 Düsseldorf (DE)**

(56) Entgegenhaltungen:
WO-A-97/00453          WO-A-98/30921
WO-A-99/12470          DE-C- 19 837 828
US-A- 4 633 182        US-A- 5 284 142
US-A- 5 588 429        US-A- 2001 051 774

EP 1 391 751 B1

**Beschreibung**

Die Erfindung betrifft ein Verfahren sowie eine Vorrichtung zur schnellen tomographischen Messung der elektrischen Leitfähigkeitsverteilung in einer Probe.

Für das Verständnis aller wesentlichen Fragen im Zusammenhang mit heterogen strukturierten Proben ist die Kenntnis der räumlichen Struktur der Probe von entscheidender Bedeutung.

Im Falle von heterogen strukturierten Proben wie z. B. Böden oder Grundwasserleitern wurde diese Kenntnis bisher vor allem durch invasive Verfahren, z. B. Bohrungen, gewonnen. Invasive Verfahren haben neben der Tatsache, daß sie die Verhältnisse in der Probe verändern, den Nachteil, daß sie die räumliche Struktur nur punktuell wiedergeben. Wichtige Zusammenhänge und Verbindungen zur Gefährdungsabschätzung, Vorhersage und Beobachtung von Transportvorgängen im Untergrund bleiben dabei unentdeckt.

In jüngerer Zeit wurden für Bodenuntersuchungen zunehmend auch nicht invasive, geophysikalische und geoelektrische Methoden eingesetzt. Hierbei liegen die Schwächen der Verfahren in der meist geringen räumlichen Auflösung, dem unklaren Zusammenhang der gemessenen physikalischen Größe mit dem eigentlich interessierenden geologischen Parameter und der nicht eindeutigen Rückrechnung der mit den Sensoren aufgenommenen Meßwerte auf die zugrundeliegenden Verhältnisse im Untergrund.

Bei einem solchen, aus dem Stand der Technik bekannten Verfahren aus der Geoelektrik, wird über mindestens zwei Elektroden ein Gleichstrom in den Untergrund eines Untersuchungsbereiches eingeleitet. Mit Elektroden und daran angeschlossenen Spannungsmeßgeräten wird die resultierende elektrische Potentialverteilung gemessen, woraus die elektrische Leitfähigkeitsverteilung im Untergrund bestimmt wird.

Bei einem weiteren aus dem Stand der Technik bekannten Verfahren, das als Controlled Source Audio Magnetotelluric (CSAMT) bekannt ist, werden ein oder mehrere elektrische Dipole an den Boden angelegt und im Frequenzbereich von 1 Hz bis 8 kHz betrieben. In einer großen Entfernung (Größenordnung etwa einige Kilometer) werden eine magnetische und eine elektrische Komponente der abgestrahlten elektromagnetischen Welle gemessen. Mit dem genannten Verfahren werden geologische Strukturen in einer großen Tiefe und Ausdehnung gemessen.

Weiterhin sind aus dem Stand der Technik Verfahren der Geoelektromagnetik bekannt, bei dem die Anregung des Untergrundes mit Spulen an der Erdoberfläche oder mittels entfernter Sender bewirkt wird, indem im Untergrund als Reaktion auf das äußere Magnetfeld ein Magnetfeld induziert wird.

Aus DE 198 37 828 ist ein Verfahren zur Berechnung der Stromdichteverteilung in einem Untergrund bekannt, bei dem mindestens zwei Elektroden mit dem Untergrund in Kontakt gebracht werden. Es wird eine niederfrequente elektrische Wechselspannung an den Elektroden angelegt, bei der sich im Untergrund abhängig von der Leitfähigkeitsverteilung eine Stromdichteverteilung einstellt. Diese erzeugt eine Magnetfeldstärkeverteilung, die mit Hilfe eines Magnetfeldsensors gemessen wird. Aus der Magnetfeldstärkeverteilung wird die Stromdichteverteilung errechnet. Aus dieser kann wiederum die Leitfähigkeitsverteilung im Untergrund berechnet werden. Die Leitfähigkeit der Probe ist eine Zielgröße und dient der Abschätzung der Probe bezüglich bestimmter Eigenschaften bzw. der Vorhersage dieser Eigenschaften.

Aus DE 198 37 828 ist auch eine Vorrichtung zur Durchführung des genannten Verfahrens bekannt, wobei ein Lock-In-Verstärker zur Auswertung des Meßsignals vorgesehen ist.

Allgemein ist in der Konduktometrie die Messung von Spannungsabfällen bzw. Potentialdifferenzen in einer zu untersuchenden Probe eine Voraussetzung zur Berechnung der Leitfähigkeit der Probe. Hierzu können die zu untersuchenden Proben z. B. mit Wechselströmen beaufschlagt werden. Aus der gemessenen Potentialdifferenz und der in der Zuleitung gemessenen Stromstärke wird der spezifische elektrische Widerstand und als Kehrwert hieraus die Leitfähigkeit der Probe berechnet. Im Falle, daß Magnetfeldstärkeverteilungen gemessen werden, kann aus der gemessenen Stromstärke und der Magnetfeldstärke ebenfalls die Leitfähigkeit der Probe berechnet werden.

Bei geoelektrischen Messungen kann die mehrdimensionale Leitfähigkeitverteilung in Proben somit z. B. mittels Stromeinspeisungen und Messung von Potentialdifferenzen bestimmt werden. Zu diesem Zweck wird die Probe meist mit einer großen Anzahl von Elektroden kontaktiert. Über jeweils zwei Elektroden wird vorzugsweise ein Wechselstrom in die Probe, z. B. Boden, eingespeist. Jede Einspeisung erzeugt eine zugehörige elektrische Potentialverteilung als Funktion der elektrischen Leitfähigkeitsverteilung in der Probe. An anderen Elektroden werden die Potentialdifferenzen gemessen.

Aus den gemessenen elektrischen Potentialen und/oder den gemessenen Magnetfeldern für hinreichend viele unterschiedliche Einspeisungen elektrischer Signale wird mittels spezieller Lösungsmethoden die Leitfähigkeitsverteilung in der Probe berechnet. Die Methode der Stromeinspeisung und Messung der elektrischen oder magnetischen Felder wird bei vielen geophysikalischen Untersuchungen mit unterschiedlichen Elektrodenanordnungen verwendet, wie z. B. bei der Schlumberger-Sondierung, der Wenner-Kartierung, Dipol-Dipol-Anordnungen, Vier-Punkt-Messungen im Rahmen von tomographischen 2D- oder 3D-Messungen (Electrical Resistivity Tomography: ERT) mit sonden- oder flächenartigen Elektrodenanordnungen.

Nachteilig werden bei den bisher benannten Meßsystemen und Verfahren nacheinander über jeweils zwei Elektroden Stromeinspeisungen durchgeführt. Die gesamte Meßzeit entspricht somit der Summe der Einzelmessungen für eine Einspeisung. Diese gesamte Meßzeit kann abhängig von der Meßanordnung und der erwünschten Auflösung und Genauigkeit sehr lang werden. Wenn z.B. eine Einzelmessung aufgrund der geforderten Meßgenauigkeit eine Meßzeit von 30 Minuten erfordert, so beträgt die gesamte Meßzeit für 10 Stromeinspeisungen bereits fünf Stunden. In Proben, in denen die Leitfähigkeitsverteilung als Zielgröße sich innerhalb weniger Stunden ändert, steht aber nur eine kurze Meßzeit zur Verfügung. Die aus dem Stand der Technik bekannten Meßgeräte sind dazu nicht geeignet.

Aus Cheney et al. (Cheney, M., Isaacson, D., Newell, J.C., 1999. Electrical impedance tomography. SIAM Review, Vol. 41. pp 85-101) ist ein Verfahren zur elektrischen Impedanztomographie bekannt, bei dem zur elektrischen Leitfähigkeitsmessung im menschlichen Körper Stromeinspeisungen unabhängig voneinander erfolgen. Nachteilig ist die Meßanordnung nur für Proben wie dem menschlichen Körper geeignet. Komplexere, z. B. geophysikalische Proben sind hiermit nicht oder nur unzureichend charakterisierbar.

Aus US 5,588,429 ist ein weiteres Verfahren zur elektrischen Impedanztomographie bei dem nacheinander Strommuster in die Probe geleitet werden, um verschiedene komplexe Leitfähigkeitsverteilungen unterscheiden zu können. Nachteilig ist die Charakterisierung der Probe mittels dieser Art der Impedanztomographie vergleichsweise langsam.

Der vorliegenden Erfindung liegt daher die Aufgabe zugrunde, ein nicht invasives Verfahren und eine entsprechende Vorrichtung zur schnellen tomographischen Messung der Leitfähigkeitsverteilung in einer Probe zur Verfügung zu stellen, welches zudem eine hohe Auflösung der zeitlichen Variation der Leitfähigkeitsverteilung ermöglicht.

Die Aufgabe wird erfindungsgemäß durch ein Verfahren mit den Merkmalen des Anspruchs 1 gelöst. Die Aufgabe wird erfindungsgemäß auch durch eine Vorrichtung mit den Merkmalen des Anspruchs 23 gelöst. Vorteilhafte Ausgestaltungen ergeben sich aus den jeweiligen unteransprüchen.

Gemäß dieses Verfahrens wird zur schnellen tomographischen Messung der Leitfähigkeitsverteilung in einer Probe, eine Vielzahl elektrischer Anregungssignale gleichzeitig in die zu untersuchende Probe eingespeist, wobei eine Zuordnung der gemessenen Signale (Potentialdifferenzen und/oder Magnetfeldstärke) anteilmäßig zu den eingespeisten elektrischen Anregungssignalen erfolgt.

Der Vorteil des erfindungsgemäßen Verfahrens liegt in der wesentlich kürzeren Meßzeit im Vergleich zu Meßmethoden mit sequentieller Einspeisung der elektrischen Anregungssignale, wie sie aus dem Stand der Technik bekannt sind. Das heißt, daß im Gegensatz zu n sequentiellen Einspeisungen eines Anregungssignals an jeweils zwei Elektroden, wie dies aus dem Stand der Technik bekannt ist, bei der erfindungsgemäßen Methode nur eine Einspeisung mit n Anregungssignalen an mehreren räumlichen Anregungspositionen parallel erfolgt. Hierdurch verringert sich die Meßzeit um den Faktor n. Dies ermöglicht eine bessere zeitliche Beobachtung von nicht stationären Leitfähigkeitsverteilungen in Proben, z. B. bei Fließprozessen.

Das Verfahren ist nicht invasiv.

Erfindungsgemäß werden die elektrischen Anregungssignale als orthogonale Signale in die Probe eingespeist. Zwei Signale sind dann zueinander orthogonal, und somit zueinander unabhängig, wenn das skalare Produkt der orthogonalen Signale in vektorieller Schreibweise Null ergibt. Die Einspeisung orthogonaler Anregungssignale ist dabei selbstverständlich nicht nur auf zwei Signale beschränkt. Das heißt, daß im Regelfall während des erfindungsgemäßen Verfahrens eine Vielzahl elektrischer Anregungssignale gleichzeitig in eine zu untersuchende Probe eingespeist werden. Jede Einspeisung erzeugt eine zugehörige Stromdichteverteilung als Funktion der elektrischen Leitfähigkeitsverteilung. Die unterschiedlichen Signale werden bei der Einspeisung an die jeweilige Einspeiseposition der Probe mittels eigener Leitungen geführt oder an der jeweiligen Position mittels einer elektrischen Schaltung erzeugt. Die resultierende Stromdichteverteilung in der Probe, sowie die daraus resultierende Potential- und/oder Magnetfeldstärkeverteilung wird durch die Summe aller orthogonalen Anregungssignale erzeugt. Die gemessene Potential- und/oder Magnetfeldstärkeverteilung kann wegen der Orthogonalität der Anregungssignale wieder in die einzelnen Anteile der Anregungssignale und daraus folgenden einzelnen Stromdichteverteilungen zerlegt werden. Die Einspeisung orthogonaler Signale dient somit als Mittel, mit dem eine Vielzahl elektrischer Anregungssignale an unterschiedlichen Einspeisepositionen gleichzeitig mit daraus folgenden gezielt unterschiedlichen Stromdichteverteilungen in die Probe eingespeist werden können und die daraus resultierenden Messsignale wieder getrennt werden können.

Hierdurch ist es möglich, die gemessenen elektromagnetischen Verteilungen wie Potentialdifferenz und/oder Magnetfeldstärkeverteilungen in die zugehörigen Anteile der jeweiligen eingespeisten elektrischen Anregungssignale zu zerlegen und den jeweiligen Stromverteilungen in der Probe anteilmäßig zuzuordnen. Dies ist die Grundlage für die schnelle tomographische Untersuchung komplexer dreidimensionaler Proben, wie Böden und Aquifere.

Die elektrischen Signale können vorteilhaft als orthogonale sinusförmige Signale in die Probe eingespeist werden. Dazu werden zum Beispiel die einzelnen Terme der Cosinusreihe, Sinusreihe oder Fourier-Reihe verwendet. Dadurch kann der jeweilige zu messende Signalanteil, welcher ebenfalls durch einen Term in der resultierenden Fourier-Reihe dargestellt wird, leicht mittels der Bestimmungsgleichungen für die Fourier-Koeffizienten berechnet werden.

In einer weiteren Ausgestaltung der Erfindung werden für die orthogonalen sinusförmigen Signale nur die einzelnen Terme der Cosinusreihe in die Probe eingespeist und die gemessenen Signale in die Cosinusanteile (Realteil) der Fourier-Reihe mittels der Bestimmungsgleichungen der Fourier-Koeffizienten zerlegt. Diese besonders einfache Methode ist zur Bestimmung des Realteils der elektrischen Leitfähigkeitsverteilung hinreichend.

Durch die zusätzliche Zerlegung der Signale in die Sinusanteile (Imaginärteil) der Fourier-Reihe kann die Verteilung der komplexen elektrischen Leitfähigkeit der Probe berechnet werden.

Ein solches Verfahren ist speziell für die Untersuchung solcher Proben interessant, bei denen durch induzierte Polarisationseffekte eine Phasenverschiebung zwischen Strom und Spannung auftritt. In diesem Fall werden zusätzlich zu den Cosinusanteilen die Fourier-Koeffizienten der Sinusanteile berechnet. Dieses Verfahren liefert mehr Informationen über das Material der Probe, da es elektrische Leitungs- und Polarisationsphänomene berücksichtigt. Das Verfahren bildet dann die Grundlage einer elektrischen Impedanztomographie, unabhängig davon ob Potentialdifferenzen oder Magnetfeldstärken oder sogar beide Größen gemessen werden.

Anstelle der orthogonalen kontinuierlichen sinusförmigen Signale können auch einfache orthogonal codierte binäre Signale verwendet werden, welche nur zwei mögliche Amplituden annehmen können, zum Beispiel +1 und -1. Die Ein-Bit-Folgen werden so codiert, dass die einzelnen Folgen (Vektoren) zueinander orthogonal sind. Dadurch wird eine gleichzeitige Einspeisung der Anregungssignale und die Zerlegung der Messsignale in die jeweiligen Anteile der Anregungssignale ermöglicht. Diese binären Signale können zum einen wesentlich einfacher erzeugt werden, da nur ein zeitliches Schalten zwischen zwei Zuständen erforderlich ist. Zum anderen ist der Rechenaufwand für die Zerlegung der Signale in die orthogonalen Anteile geringer. Dies ermöglicht eine wesentlich einfachere Realisierung des Verfahrens.

Die schnelle Messung der Potentialdifferenz ist weiterhin dadurch gekennzeichnet, daß mindestens drei Elektroden zur Anregung (Anregungs-Elektroden) der Probe verwendet werden.

Es können dann mindestens zwei zusätzliche Elektroden zur Messung der Potentialverteilung (Meß-Elektroden) mit der Probe in Kontakt gebracht werden. Sodann werden gleichzeitig elektrische Anregungssignale an zumindest einem Teil der Anregungs-Elektroden angelegt, mit dem Ziel für jedes Anregungssignal eine zugehörige eigene Stromdichteverteilung in der Probe zu erzeugen, wodurch in der Probe in Abhängigkeit von der Leitfähigkeitsverteilung Potentialunterschiede entstehen. Die Potentialdifferenzen werden durch die mindestens zwei Mess-Elektroden gemessen. Es erfolgt sodann eine Zuordnung der gemessenen Potentialdifferenzen anteilmäßig zu den eingespeisten elektrischen Anregungssignalen und somit den jeweiligen Stromdichteverteilungen. Es werden somit je nach Position der Elektroden an der Probe Spannungsanteile erfaßt.

Aus den gemessenen Potentialdifferenzen und der aus den elektrischen Anregungssignalen zumindest ableitbaren Stromstärken wird die Zielgröße, das heißt die spezifische elektrische Widerstands- oder als Kehrwert die Leitfähigkeitsverteilung in der Probe berechnet.

Die Einspeisung elektrischer Anregungssignale und die Messung der Potentialdifferenz kann in einer besonders vorteilhaften Ausgestaltung der Erfindung zumindest teilweise an der selben Elektrode stattfinden.

Hierzu können zum Einen als Anregungssignale Ströme mit hochohmigen Stromquellen erzeugt und eingespeist werden. Die Übergangswiderstände zwischen den Elektroden und der Probe werden in der späteren Berechnung der Widerstandsverteilung mit berücksichtigt.

Zum Anderen können hierzu Elektroden in Form eines Elektrodenspießes, der elektrisch entkoppelte Elektrodenflächen zur Einspeisung eines elektrischen Signals und zur Messung des Potentials umfasst, verwendet werden.

Der Aufwand zur Durchführung des Verfahrens wird so gering gehalten. Solche Elektrodenspieße können zusätzlich zu verschiedenen Elektroden zur Einspeisung der elektrischen Signale und zur Messung der Potentialdifferenz verwendet werden.

In einer weiteren Ausgestaltung der Erfindung wird das Verfahren nicht nur zur tompographischen Messung der Potentialdifferenzen sondern auch oder sogar ausschließlich zur schnellen Messung von Magnetfeldstärken eingesetzt.

Dabei werden mindestens drei Elektroden zur Einspeisung elektrischer Anregungssignale mit der Probe in Kontakt gebracht. Es kann mindestens ein Magnetfeldsensor zur Messung der resultierenden Magnetfeldstärkeverteilung an der Oberfläche oder außerhalb der Probe positioniert werden. Sodann werden gleichzeitig elektrische Signale an zumindest einem Teil der mindestens drei Elektroden angelegt und in die Probe eingespeist, mit dem Ziel, für jedes Anregungssignal eine unabhängige Stromdichteverteilung in der Probe zu erzeugen. Hierdurch entsteht in der Probe abhängig von der Leitfähigkeitsverteilung eine superponierte Stromdichteverteilung aller Signale. Dies erzeugt eine Magnetfeldstärkeverteilung, welche an ausgewählten Raumpunkten über den oder die Magnetfeldsensoren gemessen wird.

Die Zuordnung der gemessenen Magnetfeldstärkeverteilung erfolgt anteilmäßig zu den eingespeisten elektrischen Anregungssignalen wodurch die jeweiligen Magnetfeldverteilungen jeweils einer Stromverteilung zugeordnet werden können. Aus den bekannten elektrischen Signalstärken an den Anregungselektroden und den gemessenen Magnetfeldstärken läßt sich ebenfalls die Leitfähigkeitsverteilung berechnen.

An Stelle von oder zusätzlich zu Elektroden zur Anregung einer Probe können auch mindestens zwei Spulen verwendet werden. Hierdurch wird man in der Ausführung des Verfahrens flexibler.

Besonders vorteilhaft werden sowohl Potentialdifferenzen als auch Magnetfeldstärken gemessen. Es ist hierzu möglich, sowohl Spulen als auch Elektroden zur Einspeisung der elektrischen bzw. elektromagnetischen Signale zu verwenden und die auftretenden Potentialdifferenzen und/oder Magnetfeldstärken mittels der Verwendung von weiteren Elektroden und/oder Magnetfeldsensoren zu messen. Hieraus kann die komplexe Leitfähigkeitsverteilung der Probe berechnet werden. Bei gleichzeitiger Messung der Potentialdifferenzen und der Magnetfeldstärken erhöht sich die räumliche Auflösung der Leitfähigkeitsverteilung in der Probe deutlich. Hierzu werden zusätzlich zu Elektroden zur Messung der Potentialdifferenzen auch mindestens ein, insbesondere eine Vielzahl von Magnetfeldsensoren zur Bestimmung der Magnetfeldstärkeverteilung verwendet.

Vorteilhaft werden die elektrischen Signale als Wechselströme oder als Wechselspannungen in die Probe eingespeist. Diese lassen sich auf einfache Weise, z. B. durch Generatoren, erzeugen. Abhängig vom Berechnungsverfahren zur Bestimmung der Leitfähigkeitsverteilung werden im Falle, daß ein Strom oder eine Spannung als elektrisches Signal generiert und in die Probe eingespeist wird, die Anregungsspannung und/oder der -strom an der oder den Elektrode(n) gemessenen, sofern sie nicht bekannt sind.

Wenn man bei dem Verfahren nicht die verkürzte Messzeit ausnutzt, sondern eine zur sequentiellen Einspeisung vergleichbare Gesamtmesszeit wählt, so ist die statistische Genauigkeit der Messung bei gleicher elektrischer Einspeiseleistung pro Anregungssignal wesentlich besser, bzw. man erreicht die gleiche statistische Genauigkeit bei wesentlich geringeren Einspeiseleistungen pro Anregungssignal. Im letzteren Fall kann das einzuspeisende elektrische Signal je Elektrode um so schwächer eingestellt werden, je mehr Elektroden vorliegen. Dies ist insbesondere für Messungen an stark nichtlinearen Proben wichtig, da in diesem Fall die für die tomographische Bildgebung entscheidende Annahme eines linearen Mediums für eine geringe Stromaussteuerung je Elektrode besser erfüllt ist.

Eine Vorrichtung zur schnellen Messung der Leitfähigkeitsverteilung in einer Probe umfaßt erste Mittel zur Einspeisung elektrischer Anregungssignale in die Probe sowie zweite Mittel zur Messung resultierender Potentialdifferenzen und/oder Magnetfeldstärken. Die Vorrichtung weist zudem weitere Mittel zur gleichzeitigen Einspeisung der elektrischen Anregungssignale in die Probe als auch Mittel zur Trennung der Messsignale auf, so daß eine Zuordnung der gemessenen Potentialdifferenzen und/oder Magnetfeldstärken anteilmäßig zu den eingespeisten elektrischen Anregungssignalen und somit zur jeweiligen Stromverteilung möglich ist. Weiterhin ist es sinnvoll, die Mittel zur Erzeugung der Anregungssignale und die Mittel zur Erfassung der Meßsignale zeitlich zu synchronisieren. Dadurch ist gewährleistet, daß tomographische Messungen der mehrdimensionalen komplexen Leitfähigkeitsverteilung in Proben schnell erfolgen können. Zum andern wird die Zerlegung der Meßsignale in orthogonale Signale erleichtert.

Als Mittel zur Einspeisung elektrischer Signale sind insbesondere Elektroden und/oder Spulen vorgesehen.

Als Mittel zur Messung resultierender Potentialdifferenzen und/oder Magnetfeldstärken sind insbesondere Elektroden und/oder Magnetfeldsensoren vorgesehen.

Erfindungsgemäß weist die Vorrichtung eine Steuer- und Recheneinheit als weiteres Mittel zur gleichzeitigen Erzeugung der elektrischen Anregungssignale, zur Einspeisung in die Probe und zur anteiligen Zerlegung der gemessenen Signale auf. Diese erzeugt zueinander orthogonale elektrische Anregungssignale und ermöglicht die Zerlegung der gemessenen Potentialdifferenzen und/oder Magnetfeldstärken anteilmäßig zu den eingespeisten elektrischen Signalen.

Es liegt somit eine Vorrichtung vor, mit der orthogonale Signale (sinusförmige Signale, orthogonal codierte Signale) erzeugt und in eine Probe eingespeist werden, die resultierenden Signale gemessen werden und eine Zuordnung der gemessenen Signale (Potentialdifferenzen und/oder Magnetfeldstärken) zu den eingespeisten Anregungssignalen erfolgt.

In einer weiteren Ausgestaltung der Erfindung weist die Vorrichtung mindestens zwei Generatoren als Teil der Steuer- und Recheneinheit zur Erzeugung orthogonaler elektrischer Signale auf. Es liegen Zuleitungen vor, die von den Generatoren zu den ersten Mitteln zur Einspeisung elektrischer Signale in die Probe führen.

Besonders vorteilhaft weist die Vorrichtung mindestens eine Trennstufe als Teil der Steuer- und Recheneinheit auf, welche eine Zerlegung der gemessenen Signale (Potentialdifferenzen und/oder Magnetfeldstärken) anteilig zu den eingespeisten Anregungssignalen durchführt und eine Zuordnung zu den jeweiligen Stromverteilungen ermöglicht.

Die Vorrichtung umfaßt vorteilhaft mindestens eine Auswerteeinheit zur Berechnung der Leitfähigkeitsverteilung aus den gemessenen Potentialdifferenzen und/oder den gemessenen Magnetfeldstärken sowie der bekannten Daten der Anregungssignale (Stromstärke und/oder Spannungen) .

Zur Einspeisung elektrischer Signale in die Probe können mindestens drei Elektroden vorgesehen sein. Je mehr Elektroden zur unabhängigen Einspeisung vorgesehen sind, um so besser ist die erzielbare räumliche Auflösung der tomographischen Vermessung der Probe.

Als zweite Mittel zur Messung der Potentialdifferenz in der Probe sind zumindest zwei Elektroden vorgesehen. Je mehr Elektroden als zweite Mittel vorgesehen sind, um so genauer ist die erzielbare Auflösung der tomographischen Vermessung der Probe.

Eine Besonderheit der Vorrichtung liegt vor, wenn als erste Mittel zur Anregung der Probe mindestens drei Elektroden vorgesehen sind, die in Form eines Elektrodenspießes so ausgestaltet sind, daß an diesen Elektrodenspießen zugleich die Messung von Potentialdifferenzen erfolgen kann.

Dadurch wird die Vorrichtung insgesamt von der Anzahl der Elektroden her reduziert. An der metallischen Spitze des Spießes befindet sich eine Elektrode zur Messung des Potentials in der Probe. Über den Elektrodenspieß-Mantel wird das elektrische Anregungssignal in die Probe eingespeist. Mantel und Spitze sind elektrisch voneinander getrennt. Einen solchen Elektrodenspieß kann man auch in dichte Proben, wie Böden oder Grundwasserleiter einführen. Zur Installation solcher Elektrodenspieße benötigt man gegenüber der Installation von getrennten Elektroden für Anregung und Messung nur noch die Hälfte der Zeit. Die Untersuchung einer gegebenen Probenfläche bzw. eines Probeninhalts wird dadurch beschleunigt, insbesondere bei der Untersuchung komplexer Proben, wie Böden, bei denen mit vielen Elektroden gleichzeitig gearbeitet werden muß.

Die Vorrichtung kann an Stelle oder zusätzlich zu den Elektroden auch mindestens zwei Spulen als erste Mittel zur Einspeisung elektrischer Signale in die zu untersuchende Probe aufweisen.

Die Spulen induzieren ein primäres Magnetfeld, das in der Probe einen Wirbelstrom und somit ein sekundäres Gegenfeld erzeugt. Das resultierende Gesamtmagnetfeld kann über zumindest einen Magnetfeldsensor gemessen werden. Es können auch mindestens zwei Elektroden zur Messung einer durch die Wirbelströme erzeugten Potentialdifferenz verwendet werden.

Besonders vorteilhaft weist die Vorrichtung neben Elektroden zur Einspeisung von elektrischen Signalen sowohl mindestens zwei Elektroden zur Messung der Potentialdifferenz und mindestens einen Magnetfeldsensor zur Messung der Magnetfeldstärke auf. Hierdurch wird bei gleichzeitiger Messung der Potentialdifferenzen und der Magnetfeldstärken eine deutliche Verbesserung der räumlichen Auflösung der Leitfähigkeitsverteilung in der Probe erzielt.

Im weiteren wird die Erfindung an Hand einiger Ausführungsbeispiele und der beigefügten Figuren näher erläutert.

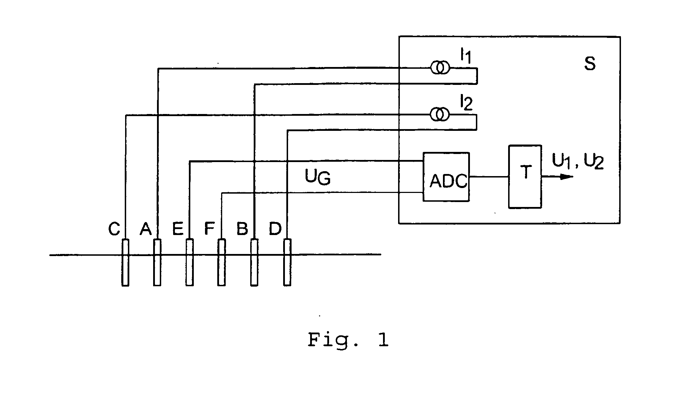

In Figur 1 ist grob schematisiert ein Anwendungsbeispiel der geoelektrischen Widerstandstiefensondierung nach Schlumberger, modifiziert auf die erfindungsgemäße Weise, dargestellt. Ein Elektrodenpaar mit den Elektroden E und F dient zur Messung der Potentialdifferenz $U_G$, und zwei weitere Elektrodenpaare A und B sowie C und D dienen zur Einspeisung von Wechselströmen $I_1$ und $I_2$. Die Stromsignale $I_1$ und $I_2$ sind zeitkontinuierliche orthogonale sinus-förmige Signale

$$I_i = c_i \cos(i\omega_0 t)$$

mit $c_i$ = Scheitelwert (oder Spitzenwert) der Anregungs-Wechselstromamplitude,

$$t = \text{Zeit},$$

i= Nummer der Signale 1 und 2, und einer Grundkreisfrequenz $\omega_0 = 2\pi f_0$. Die Signale sind Cosinus-Terme der Fourierreihe und daher orthogonal, da sie die Voraussetzung für orthogonale Signale,

$$\int_0^T I_i(t)I_k(t)dt = 0; \, f\ddot{u}r \, i \neq k \, ,$$

mit i = 1 oder 2
k = 1 oder 2,

erfüllen. In diesem Beispiel wurden nur die ersten beiden Terme ausgewählt. Die sinusförmigen Anregungssignale haben somit die Frequenzen $1\omega_0$ und $2\omega_0$. Die Integrationszeit T ist in der Regel die Periodenlänge $1/f_0$ oder ein Vielfaches von $1/f_0$. Aufgrund der Einspeisung mit den unabhängigen Strömen $I_1$ und $I_2$ entstehen im Untergrund zwei geometrisch unterschiedliche Stromdichteverteilungen $j_1$ und $j_2$. Für niedrige Anregungsfrequenzen und eine reellwertige spezifische Widerstandsverteilung in der Probe ist die gemessene Potentialdifferenz

$$U_G = \sum_i a_i \cos(i\omega_0 t) = \sum_i U_i \quad , \qquad\qquad (1)$$

mit i = 1 und 2,

$a_i$ = Scheitelwerte der anteiligen Messspannungsamplituden

und $\omega_0$ = Grundkreisfrequenz der eingespeisten Anregungssignale. Die gemessenen Potentialdifferenzen setzen sich wieder aus Cosinus-Termen der Fourierreihe zusammen und können daher wieder in die einzelnen Spannungsanteile $U_i$ (oder Potentialdifferenzen) mit den Frequenzen $1\omega_0$ und $2\omega_0$ zerlegt werden, welche durch die Ströme $I_1$ und $I_2$ erzeugt werden. Die Scheitelwerte $a_i$ sind die reellen Koeffizienten der Fourierreihe und können mittels der Bestimmungsgleichung für die Fourier-Koeffizienten

$$a_i = \frac{2}{T} \int_0^T U_G(t)\cos(i\omega_0 t)dt \ ,$$

bestimmt werden.

Für die anteiligen Potentialdifferenzen gilt also

$$U_i = a_i \cos(i\omega_0 t) \ .$$

Aus den bekannten Anregungsströmen $I_i$, den Spannungen $U_i$ und den bekannten geometrischen Positionen der Elektroden kann die Leitfähigkeitsverteilung in der Probe bestimmt werden Die Auflösung steigt mit der Anzahl der Mess-Elektroden und mit der Anzahl der geometrisch unterschiedlichen Stromdichteverteilungen in der Probe, welche mittels orthogonaler Anregungsströme erzeugt werden.

Für Proben, die eine Phasenverschiebung zwischen Strom und Spannung erzeugen, ist eine Erweiterung der Gleichung (1) erforderlich.

Die gemessene phasenverschobene Spannung $U_G$

$$U_G = \sum_i a_i \cos(i\omega_0 t) + b_i \sin(i\omega_0 t) = \sum_i U_i$$

setzt sich in diesem Fall aus den phasenverschobenen Spannungsanteilen $U_i$ zusammen. Die zusätzlichen Koeffizienten $b_i$ werden auch mittels der Bestimmungsgleichungen für die Fourier-Koeffizienten (diesmal Sinusanteile) bestimmt:

$$b_i = \frac{2}{T} \int_0^T U_G(t)\sin(i\omega_0 t)dt \qquad i = [1,2] \ .$$

Die Teilspannungen, welche den jeweiligen Anregungsströmen zugeordnet werden, sind also:

$$U_i = a_i \cos(i\omega_0 t) + b_i \sin(i\omega_0 t) \ .$$

Die Phasenverschiebungen ($-\arctan(b_i/a_i)$) und die Amplituden $\sqrt{a_i^2 + b_i^2}$ der gegenüber $I_i$ phasenverschobenen Teilspannungen $U_i$ sind somit bekannt.

Die letzte Auswertung liefert auch die Amplituden der Teilspannungen $U_i$, wenn die exakten Phasen der Anregungssignale nicht bekannt sind. Dies ist besonders wichtig, wenn keine zur Trennstufe synchronisierten Generatoren verwendet werden, da diese ein sinusförmiges Signal mit unbekannter Phasenlage erzeugen würden. Für die einfache Widerstandstomographie sind nach dieser Methode keine synchronisierten Generatoren erforderlich. Wenn man von reellen spezifischen Widerständen der Probe ausgeht, so kann die Phasenverschiebung nur von den nicht synchronisierten Generatoren stammen und ist daher ohne Bedeutung.

Die Anzahl der Ströme $I_i$ ist, wie in diesem Beispiel, nicht auf zwei begrenzt, sondern kann beliebig vergrößert werden. Als Beispiel könnten mit einer Grundfrequenz $f_0$ von 0.1 Hz in einem Frequenzbereich von 10 Hz bis 19,9 Hz 100 orthogonale Signale untergebracht werden. Die minimale Messzeit T in diesem Fall wäre $1/f_0 = 10$ Sekunden. Man

sollte jedoch einen Zeitausschnitt T im eingeschwungenen Zustand des Systems wählen, so dass sich die Messung in der Regel um die Einschwingzeit verlängert.

Anstelle der zeitkontinuierlichen sinusförmigen Anregungssignale können auch zeitdiskrete Signale

$$I_{i,n} = c_i \cos(i\omega_0 n T_a) \quad i = [1,2]$$

mit der Abtastzeit $T_a$

und der Nummer n des Abtastwertes im Bereich von 1 bis N,

verwendet werden, welche mittels digitaler Signalverarbeitung einfacher erzeugt und verarbeitet werden können. Die Ströme $I_1$ und $I_2$ sind in diesem Fall orthogonale Vektoren mit jeweils N Werten. Die Anzahl N wird so gewählt, dass $N*T_a = 1/f_0$ ist oder ein Vielfaches von $1/f_0$ ist.

In der praktischen Anwendung werden die Ströme als orthogonale Signale lokal an den Elektroden oder zentral erzeugt und von der Steuer- und Recheneinheit S zueinander und zur Trennstufe T phasensynchronisiert, so dass die mathematisch erforderlichen Operationen entsprechend den oben genannten Gleichungen in der Einheit S korrekt durchgeführt werden können. Die Einheit S umfaßt mindestens zwei Generatoren zur Erzeugung orthogonaler Signale. Es können dafür quartzgesteuerte Sinusgeneratoren verwendet werden, dessen Frequenzen entsprechend dem obigen Beispiel eingestellt werden. Die Signale können bei Bedarf mit nachfolgenden Leistungsverstärkern mit Strom- oder Spannungsausgang weiter verstärkt werden.

Besser ist es, die orthogonalen Signale (zum Beispiel Cosinussignale mit den Frequenzen $i*f_0$) mit einem PC oder einer anderen Recheneinheit zu berechnen und über entsprechend viele DAC-Kanäle und nachfolgenden Leistungsverstärkern gleichzeitig auszugeben. Diese Methode ist in der Regel bei vielen Anregungssignalen preiswerter und universeller. Zusätzlich ist hierbei die Synchronisation der Anregungssignale zueinander sichergestellt, so dass auch die Messung der komplexen Impedanz möglich wird.

Im Fall der orthogonal kodierten Signale werden die DACs und Leistungsverstärker durch einfache Leistungsschalter, welche zwischen zwei Pegeln schalten, ersetzt. Dadurch ist eine weitere Vereinfachung möglich.

Die Trennstufe T, zur Trennung der gemessenen Signale (in S enthalten), besteht im einfachsten Fall aus mindestens einem ADC-Wandler, welcher die Signale digitalisiert, und einer Recheneinheit, welche die Signale nach den obigen Gleichungen in die Anteile der zugehörigen Anregungssignale zerlegt.

Die Recheneinheit in S kann mittels PC, Mikrokontroller, digitalem Signalprozessor oder sonstigen programmierbaren Bausteinen realisiert werden, um die obigen Aufgaben zu erfüllen. Auch eine analoge Recheneinheit ist möglich.

In diesem einfachen Beispiel ermöglicht es die vorgeschlagene Methode den spezifischen Widerstand, entsprechend der geoelektrischen Widerstandstiefensondierung nach Schlumberger, des Untergrundes für verschiedene Tiefenbereiche gleichzeitig zu erfassen.

Die Methode beschränkt sich aber nicht nur auf geoelektrische Messungen, sondern kann bei allen Untersuchungsmethoden angewendet werden, für die bisher eine sequentielle Anlegung von Strom- oder Spannungsquellen vorgesehen ist.

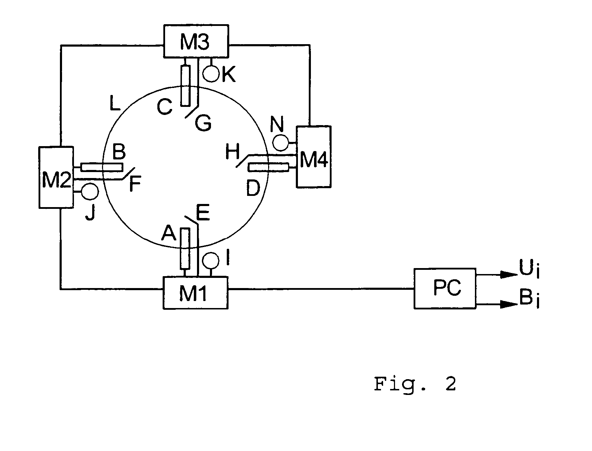

Ein weiteres Beispiel ist in Figur 2 dargestellt. Diese Anordnung zeigt ebenfalls grob schematisiert eine Vorrichtung zur schnellen tomographischen Untersuchung der Leitfähigkeitsverteilung in heterogenen Proben, hier einem Lysimeter. Das Lysimeter L ist als Zylinder in der Draufsicht dargestellt. Zusätzlich zu den Elektroden in Figur 1 sind zwei weitere Elektroden G und H zur Messung der Potentialdifferenz eingezeichnet. Die Wechselströme oder -spannungen werden in den Modulen M1 bis M4 erzeugt. Diese werden vom PC gesteuert. Die Trennung der gemessenen Signale erfolgt entweder in den Modulen oder im PC. Die Anordnung der Elektroden entspricht einer typischen ERT-Anwendung (elektrische Widerstands-Tomographie). Für eine Elektrode müssen die Übergangswiderstände von der Elektrode zum Erdreich mit in der späteren Berechnung der Leitfähigkeit berücksichtigt werden. Sinnvoll werden in diesem Fall Stromquellen für die Anregungssignale verwendet.

In einer weiteren Ausgestaltung der Erfindung werden in diesem Beispiel an Stelle der Elektrodenpaare C-G, H-D A-E und B-F vier Elektrodenspieße zur Einspeisung von elektrischen Anregungssignalen und gleichzeitigen Potential-Messung in Proben mit zwei elektrisch entkoppelten Flächen verwendet. Dabei dient als Elektrode zur Messung des Potentials die Spitze des Elektrodenspießes. Der Mantel des Elektrodenspießes dient als Elektrode zur Einspeisung der elektrischen Anregungssignale. Zusätzlich zu den Potentialdifferenzen oder anstelle dessen können die Magnetfelder gemessen werden. In der Figur 2 sind die Magnetfeldsensoren mit I, J, K und N gekennzeichnet. Diese Anordnung kann auch zur oberflächennahen Untersuchung von Böden entsprechend den Methoden der Geoelektrik und/oder Geomagnetik verwendet werden. Aus Gründen der Übersichtlichkeit wurden in Figur 2 nur wenige Elektroden und Magnetfeldsensoren eingezeichnet. Die Anzahl der Elektroden kann beliebig vergrößert werden, um so eine höhere räumliche Auflösung zu erzielen.

Generell kann das Verfahren zur Messung der räumlichen Verteilung elektromagnetischer Felder, wie Potentialverteilungen und Magnetfeldstärkeverteilungen, an jedweden Proben, die mit elektrischen Signalen beaufschlagt werden können, eingesetzt werden. Aus den gemessenen Potentialdifferenzen und/oder Magnetfeldstärken, sowie den bekannten Stärken der eingespeisten Wechselströme werden die spezifischen Widerstände bzw. die Leitfähigkeitsverteilung in der Probe berechnet.

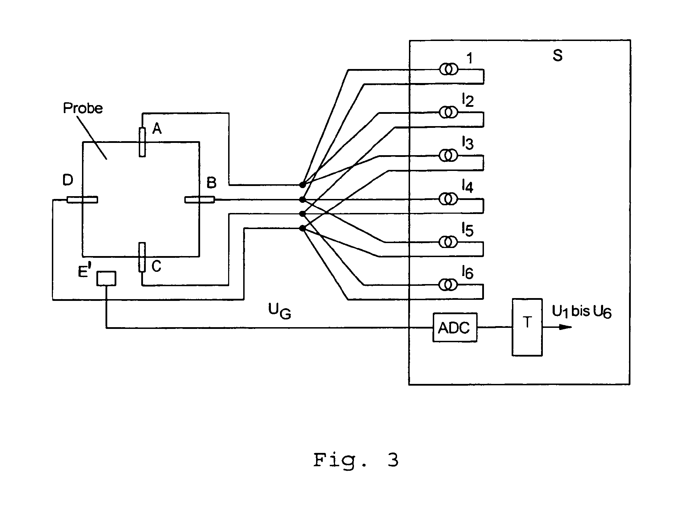

In Figur 3 ist eine Anordnung, entsprechend Figur 1, mit vier Anregungselektroden dargestellt. Die Probe ist ein quaderförmiger Körper. Anstelle der Spannungsmessung mit den Elektroden E-F in Figur 1 wird in Figur 3 das Magnetfeld mit einem Magnetfeldsensor E' gemessen und in eine Spannung $U_G$ umgeformt. Es werden zusätzlich zu den beiden Strömen $I_1$ und $I_2$ vier weitere Ströme $I_3$ bis $I_6$ erzeugt und eingespeist. Mit vier Anregungselektroden und Stromeinspeisung über jeweils zwei Elektroden können maximal sechs geometrisch unterschiedliche Stromdichteverteilungen in der Probe mittels sechs zueinander orthogonalen Anregungsströmen erzeugt werden. Es werden in diesem Beispiel alle möglichen Kombinationen der Stromeinspeisung über jeweils zwei Elektroden (AB, AC, AD, BC, BD, CD) verwendet.

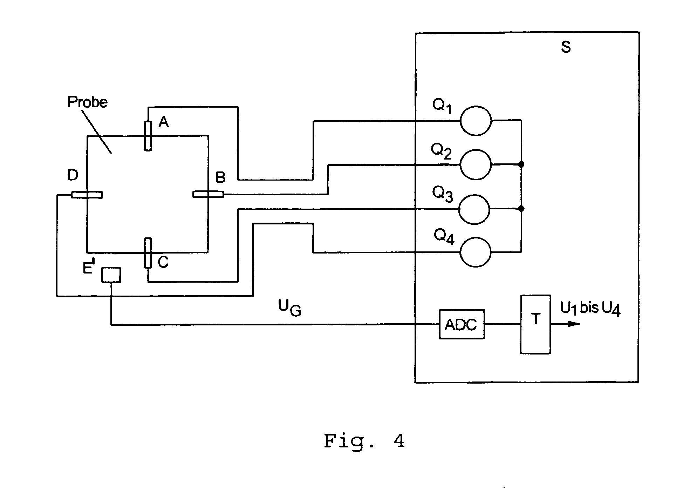

In Figur 4 ist eine Anordnung entsprechend Figur 3 dargestellt. Es werden jedoch anstelle der sechs Ströme $I_1$ bis $I_6$ vier Spannungen $Q_1$ bis $Q_4$ zur Anregung erzeugt und an die Elektroden A, B, C, D angelegt. Mit vier Anregungselektroden und Spannungseinspeisung können maximal vier unabhängige Stromdichteverteilungen in der Probe mittels vier zueinander orthogonalen Anregungsspannungen erzeugt werden, welche in diesem Beispiel vollständig genutzt werden.

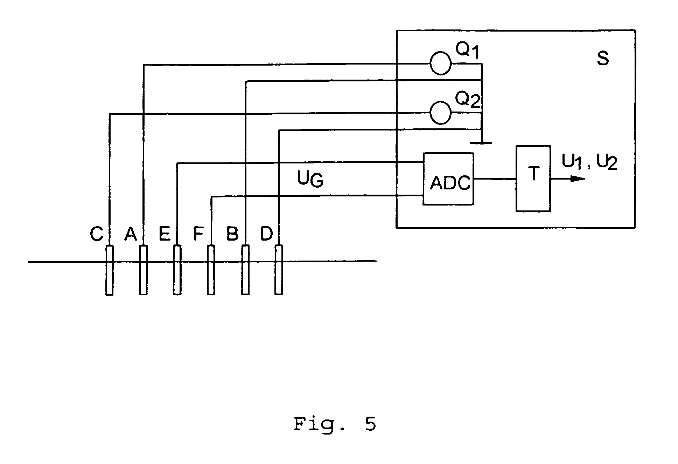

In Figur 5 werden anstelle der orthogonalen kontinuierlichen sinusförmigen Signale einfache binäre orthogonal codierte Signale verwendet, welche nur die Amplituden +c und -c annehmen können. An den Elektrodenpaaren A und B sowie C und D werden die Werte der Wechselspannungen ($Q_1$ und $Q_2$)

$$Q_i = c\ S_i,$$

mit i= 1, 2 und

$$S_1 = (-1, +1, +1, -1),$$

$$S_2 = (+1, +1, -1, -1),$$

zeitlich nacheinander angelegt. Die Signale $S_1$ und $S_2$ sind zueinander orthogonal, da an den Elektroden B und D das Potential jeweils gleich ist und damit das Skalarprodukt von $S_1$ und $S_2$ Null ist:

$$S_i S_k^T = 0\ \text{für}\ i \neq k,$$

mit i = 1 oder 2,
mit k = 1 oder 2.

Somit sind $Q_1$ und $Q_2$ auch zueinander orthogonal. Aufgrund der Einspeisung mit den unabhängigen Spannungen $Q_1$ und $Q_2$ entstehen im Untergrund zwei unabhängige Stromdichteverteilungen $j_1$ und $j_2$. Für niedrige Anregungsfrequenzen und reelle spezifische Widerstände der Probe ist die gemessene Potentialdifferenz:

$$U_G = \sum_i a_i S_i = \sum_i U_i$$

mit i = 1 und 2,
$a_i$ = Messspannungsamplitude.

Die gemessene Potentialdifferenz setzt sich wieder aus den Signalen $S_i$ zusammen. Die reellen Koeffizienten $a_i$ werden mittels des Skalarproduktes von $U_G$ und $S_i$ entsprechend der folgenden Gleichung bestimmt:

$$a_i = (U_G S_i^T)/N,$$

N = Anzahl der Werte je Vektor.

In diesem Beispiel ist N = 4. Für die Potentialdifferenz gilt also:

$$U_i = a_i S_i.$$

Die Anregungsströme $I_{AB,G}$ und $I_{CD,G}$ die durch die Elektrodenpaare fließen, werden gemessen und entsprechend

$$I_{AB,i} = b_{AB,i} S_i \text{ mit } b_{AB,i} = (I_{AB,G} S_i^T)/N,$$

und

$$I_{CD,i} = b_{CD,i} S_i \text{ mit } b_{CD,i} = (I_{CD,G} S_i^T)/N,$$

in die Anteile $I_{AB,i}$ und $I_{CD,i}$ zerlegt. Aus den nun bekannten anteiligen Anregungsströmen $I_{AB,i}$ und $I_{CD,i}$, den Spannungen $U_i$ und den bekannten geometrischen Positionen der Elektroden kann die spezifische Widerstandsverteilung in der Probe bestimmt werden Auch in diesem Beispiel wird die erzielbare Ortsauflösung durch weitere Anregungselektroden, orthogonale Stromeinspeisungen und Messsensoren gesteigert.

Folgende Anwendungsgebiete innerhalb der Geophysik sind möglich:

- Ermittlung der Konzentration gelöster Substanzen in Böden und Grundwasserleitern aus der mit dem erfindungsgemäßen Verfahren erfassten Leitfähigkeitsverteilung.
- Beobachtung chemischer Prozesse durch Messung der zeitlichen und räumlichen Variationen der Leitfähigkeitsverteilung (z. B. Fällungsreaktionen).
- Aufspüren und Untersuchen von elektrischen Anomalien (metallische Körper, Erze, Leitungen, Blindgänger, archäologische Objekte).
- Erkundung und Monitoring bevorzugter Fließ- und Transportwege in porösen Medien (z. B. Böden, Aquifere, Kluftgesteine, Lysimeter).
- Verlagerung von Agrochemikalien.
- Unterstützung des Katastrophenmanagements bei Industrieunfällen.
- Gefährdungsabschätzung für Industriestandorte.
- Monitoring bei Labor- und Freilandversuchsfeldern zur Untersuchung von Transportvorgängen in porösen Medien.
- Bestimmung von Partikel- oder kolloidalem Transport.
- Aufspüren und Untersuchen von besonders schlecht leitenden Flüssigkeiten in Böden und Grundwasserleitern (durch die Verdrängung des Wasserfilms auf den Körnern), etwa:

  - Schadstofffahnen (Öle, PAKs)
  - bei der Sanierung von Böden
  - beim Monitoring von Deponien auf Undichtigkeiten

- Monitoring von Deichen auf Durchweichung.
- Erkundung von wassertragenden oder wasserführenden Schichten in ariden oder semiariden Gebieten.
- Erkundung von Salz-Süßwasserfronten im Untergrund, in Flußsystemen oder in Agroökosystemen.

Folgende Anwendungsgebiete innerhalb der Medizin sind möglich:

- Klinisches Monitoringverfahren zur regionalen Lungenfunktionsdiagnostik.
- Erfassung von Lungen- und Herzfunktion.
- in vivo Untersuchung der Impedanzverteilung im Thorax.

Grundsätzlich können das Verfahren und die erfindungsgemäße Vorrichtung auch für die Werkstoffprüfung verwendet werden.

**Patentansprüche**

1. Verfahren zur schnellen tomographischen Messung der Leitfähigkeitsverteilung in einer Probe mittels Einspeisung elektrischer Anregungssignale in die Probe, wobei
die elektrischen Anregungssignale gleichzeitig in die Probe eingespeist werden und eine Zuordnung gemessener Potentialdifferenzen und/oder gemessener Magnetfeldstärken anteilmäßig zu den eingespeisten elektrischen Anregungssignalen erfolgt,
**dadurch gekennzeichnet, daß**
die elektrischen Signale gleichzeitig als orthogonale Signale in die Probe eingespeist werden.

2. Verfahren nach Anspruch 1,
**dadurch gekennzeichnet, daß**
die elektrischen Signale als orthogonale sinusförmige Signale in die Probe eingespeist werden.

3. Verfahren nach einem der vorherigen Ansprüche,
**dadurch gekennzeichnet, daß**
Spannungsanteile $a_i$ durch die Bestimmungsgleichungen der Fourier-Koeffizienten (Cosinusanteile) gemäß der Formel

$$a_i = \frac{2}{T} \int_0^T U_G(t) \cos(i\omega_0 t) dt$$

mit $a_i$ = Scheitelwerte der anteiligen Messspannungsamplituden; $\omega_0$ = Grundkreisfrequenz der eingespeisten Anregungssignale; i = Index des Anregungssignals 1 bis $\infty$; $U_g$ = gemessene Potentialdifferenz; t = Zeit
berechnet werden.

4. Verfahren nach einem der vorherigen Ansprüche,
**dadurch gekennzeichnet, daß**
Spannungsanteile $b_i$ durch die Bestimmungsgleichungen der Fourier-Koeffizienten (Sinusanteile) gemäß der Formel

$$b_i = \frac{2}{T} \int_0^T U_G(t) \sin(i\omega_0 t) dt,$$

mit $b_i$ = Scheitelwerte der um 90 ° phasenverschobenen anteiligen Meßspannungsamplitude; $\omega_0$ = Grundkreisfrequenz der eingespeisten Anregungssignale; i = Index des Anregungssignals 1 bis $\infty$; $U_g$ = gemessene Potentialdifferenz; t = Zeit
berechnet werden.

5. Verfahren nach einem der vorhergehenden Ansprüche,
**dadurch gekennzeichnet, daß**
die Koeffizienten $a_i$ (Cosinusanteil) und $b_i$ (Sinusanteil) zur Berechnung der komplexen Impedanz der Probe herangezogen werden.

6. Verfahren nach einem der vorhergehenden Ansprüche,
**dadurch gekennzeichnet, daß**
die elektrischen Signale als orthogonal codierte Signale in die Probe eingespeist werden.

7. Verfahren nach einem der vorhergehenden Ansprüche,

**dadurch gekennzeichnet, daß**
die Signale nur zwei mögliche Amplituden annehmen können.

8. Verfahren nach einem der vorhergehenden Ansprüche,
**dadurch gekennzeichnet, daß**
mindestens drei Elektroden zur Anregung der Probe mit dieser in Kontakt gebracht werden.

9. Verfahren nach einem der vorhergehenden Ansprüche,
**dadurch gekennzeichnet, daß**
mindestens zwei Elektroden zur Messung von Potentialdifferenzen mit der Probe in Kontakt gebracht werden.

10. Verfahren nach einem der vorhergehenden Ansprüche 8 bis 9,
**dadurch gekennzeichnet, daß**
elektrische Anregungssignale an zumindest einem Teil der mindestens drei Elektroden zur Anregung der Probe angelegt werden, wodurch in der Probe eine Potentialverteilung entsteht, die über die mindestens zwei Elektroden zur Messung der Potentialdifferenzen vermessen wird.

11. Verfahren nach einem der vorhergehenden Ansprüche 8 bis 10,
**dadurch gekennzeichnet, daß**
die elektrischen Signale gleichzeitig über die Elektroden zur Einspeisung in die zu untersuchende Probe eingespeist werden und eine Zuordnung der gemessenen Potentialdifferenzen anteilmäßig zu den eingespeisten elektrischen Anregungssignalen erfolgt.

12. Verfahren nach einem der vorhergehenden Ansprüche,
**dadurch gekennzeichnet, daß**
die Einspeisung elektrischer Anregungssignale und die Messung der Potentialdifferenz an derselben Elektrode stattfinden.

13. Verfahren nach vorhergehendem Anspruch 12,
**gekennzeichnet durch**
Verwendung von Elektroden in Form eines Elektrodenspießes mit elektrisch entkoppelten Elektrodenflächen zur Einspeisung eines elektrischen Signals und zur Messung der Potentialdifferenz.

14. Verfahren nach einem der vorhergehenden Ansprüche,
**gekennzeichnet durch**
Verwendung einer hochohmigen Stromquelle.

15. Verfahren nach einem der vorhergehenden Ansprüche,
**dadurch gekennzeichnet, daß**
mindestens zwei Spulen zur Anregung der Probe mit dieser in Kontakt gebracht werden.

16. Verfahren nach einem der vorhergehenden Ansprüche,
**dadurch gekennzeichnet, daß**
mindestens ein Magnetfeldsensor zur Messung von Magnetfeldstärken mit der Probe in Kontakt gebracht wird.

17. Verfahren nach einem der vorhergehenden Ansprüche,
**dadurch gekennzeichnet, daß**
elektrische Anregungssignale an zumindest einem Teil der Spulen oder Anregungs-Elektroden angelegt wird, wodurch in der Probe auf Grund der Leitfähigkeitsverteilung eine Stromdichteverteilung und hieraus eine Magnetfeldstärkeverteilung entsteht.

18. Verfahren nach einem der vorhergehenden Ansprüche,
**dadurch gekennzeichnet, daß**
die elektrischen Signale gleichzeitig über die Spulen bzw. über die Anregungs-Elektroden in die zu untersuchende Probe eingespeist werden und eine Zuordnung der gemessenen Magnetfeldstärkeverteilungen anteilmäßig zu den eingespeisten elektrischen Signalen erfolgt.

19. Verfahren nach einem der vorhergehenden Ansprüche,

**dadurch gekennzeichnet, daß**
sowohl mindestens zwei Elektroden zur Messung einer Potentialdifferenz und mindestens ein Magnetfeldsensor zur Messung einer Magnetfeldstärke verwendet werden.

20. Verfahren nach einem der vorhergehenden Ansprüche,
**dadurch gekennzeichnet, daß**
mindestens drei Elektroden zur Anregung der Probe und mindestens ein Magnetfeldsensor zur Messung einer Magnetfeldstärke mit der Probe in Kontakt gebracht werden.

21. Verfahren nach einem der vorhergehenden Ansprüche,
**dadurch gekennzeichnet, daß**
die elektrischen Signale als Wechselströme in die Probe eingespeist werden.

22. Verfahren nach einem der vorhergehenden Ansprüche,
**dadurch gekennzeichnet, daß**
die elektrischen Signale als Wechselspannungen in die Probe eingespeist werden und die Stromstärken in den Zuleitungen, die zur Probe führen, gemessen werden.

23. Vorrichtung zur schnellen tomographischen Messung der Leitfähigkeitsverteilung in einer Probe, mit ersten Mitteln (A,B,C,D) zur Einspeisung elektrischer Anregungssignale in die Probe sowie zweiten Mitteln (E,F) zur Messung der aus der Einspeisung elektrischer Signale resultierenden Potentialdifferenzen und/oder Magnetfeldstärken sowie weitere Mittel zur gleichzeitigen Einspeisung der elektrischen Signale in die Probe, die eine Zuordnung der gemessenen Potentialdifferenzen und/oder Magnetfeldstärken anteilmäßig zu den eingespeisten elektrischen Anregungssignalen erlauben,
**dadurch gekennzeichnet, dass**
eine Steuer- und Recheneinheit (S) als weiteres Mittel elektrische orthogonale Anregungssignale erzeugt und eine Zuordnung der gemessenen Potentialdiffererizen und/oder Magnetfeldstärken anteilmäßig zu den gleichzeitig eingespeisten elektrischen orthogonalen Signalen ermöglicht.

24. Vorrichtung nach Anspruch 23,
umfassend
mindestens zwei Generatoren als Teil einer Steuer- und Recheneinheit S zur Erzeugung orthogonaler elektrischer Anregungssignale.

25. Vorrichtung nach einem der Ansprüche 23 bis 24,
**gekennzeichnet durch**
Zuleitungen, die die erzeugten elektrischen Anregungssignale zur Probe führen.

26. Vorrichtung nach einem der vorhergehenden Ansprüche 23 bis 25,
umfassend eine Auswerteeinheit zur Berechnung der Leitfähigkeitsverteilung in der Probe.

27. Vorrichtung nach einem der Ansprüche 23 bis 26,
**dadurch gekennzeichnet, daß**
als erste Mittel zur Einspeisung elektrischer Signale in die Probe mindestens drei Elektroden vorgesehen sind.

28. Vorrichtung nach einem der Ansprüche 23 bis 27,
**dadurch gekennzeichnet, daß**
als zweite Mittel zur Messung der elektromagnetischen Felder mindestens zwei Elektroden vorgesehen sind.

29. Vorrichtung nach einem der Ansprüche 23 bis 28,
**dadurch gekennzeichnet, daß**
als erste Mittel zur Einspeisung elektrischer Anregungssignale in die Probe mindestens drei Elektroden vorgesehen sind, die so ausgestaltet sind, daß an diesen Elektroden zugleich die Messung von Potentialdifferenzen erfolgt.

30. Vorrichtung nach Anspruch 29,
umfassend
Elektroden mit elektrisch entkoppelten Elektrodenflächen in Form eines Elektrodenspießes, wobei der Elektrodenspieß eine Spitze und einen Mantel aufweist.

**31.** Vorrichtung nach einem der Ansprüche 23 bis 30,
umfassend
mindestens zwei Spulen als alleinige oder zusätzlich zu den Anregungs-Elektroden vorhandene erste Mittel zur Einspeisung elektrischer Signale in die Probe.

**32.** Vorrichtung nach einem der Ansprüche 23 bis 31,
umfassend
mindestens einen Magnetfeldsensor als alleiniges oder zusätzlich zu Elektroden vorhandenes zweites Mittel zur Messung einer Magnetfeldstärke.

**33.** Vorrichtung nach einem der Ansprüche 23 bis 32,
**gekennzeichnet durch**
eine Trennstufe T, die die gemessenen Signale in anteilige, den Anregungssignalen zugeordnete Signale zerlegt.

**Claims**

**1.** Method for fast tomographic measurement of conductivity distribution within a sample by means of feeding electrical excitation signals into the sample, in which the electrical excitation signals are fed into the sample at the same time and allocation of the measured potential differences and/or measured magnetic field strengths takes place in proportion to the electrical excitation signals fed in,
**characterised in that**
the electrical signals are fed into the sample at the same time as orthogonal signals.

**2.** Method according to claim 1,
**characterised in that**
the electrical signals are fed into the sample as orthogonal sinusoidal signals.

**3.** Method according to one of the previous claims,
**characterised in that**
voltage components $a_i$ are calculated through the conditional equations of the Fourier coefficients (cosine components) according to the formula

$$a_i = \frac{2}{T} \int_0^T U_G(t) \cos(i\omega_0 t)\, dt$$

with $a_i$ = peak values of the proportionate measuring voltage amplitudes; $\omega_0$ = basic circuit frequency of the excitation signals fed in; $i$ = index of the excitation signal 1 to $\infty$; $U_G$ = measured potential difference; $t$ = time.

**4.** Method according to one of the previous claims,
**characterised in that**
voltage components $b_i$ are calculated through the conditional equations of the Fourier coefficients (sinus portions) according to the formula

$$b_i = \frac{2}{T} \int_0^T U_G(t) \sin(i\omega_0 t)\, dt,$$

with $b_i$ = peak values of the proportionate measuring voltage amplitude phase shifted by 90°; $\omega_0$ = basic circuit frequency of the excitation signals fed in; i = index of the excitation signal 1 to ∞; $U_G$ = measured potential difference; t = time.

5. Method according to one of the previous claims,
**characterised in that**
the coefficients $a_i$ (cosine component) and $b_i$ (sine component) are used to calculate the complex impedance of the sample.

6. Method according to one of the previous claims,
**characterised in that**
the electrical signals are fed into the sample as orthogonal coded signals.

7. Method according to one of the previous claims,
**characterised in that**
the signals may only receive two possible amplitudes.

8. Method according to one of the previous claims,
**characterised in that**
at least three electrodes for excitation of the sample are brought into contact with it.

9. Method according to one of the previous claims,
**characterised in that**
at least two electrodes for measuring potential differences are brought into contact with the sample.

10. Method according to one of the previous claims 8 to 9,
**characterised in that**
electrical excitation signals are applied to at least a part of the at least three electrodes for excitation of the sample, through which potential distribution is produced within the sample, which is measured through the at least two electrodes for measuring potential differences.

11. Method according to one of the previous claims 8 to 10,
**characterised in that**
the electrical signals are simultaneously fed into the sample to be examined through the electrodes for the purposes of feeding in and an allocation of the measured potential differences takes place in proportion to the electrical excitation signals fed in.

12. Method according to one of the previous claims,
**characterised in that**
the feeding in of electrical excitation signals and the measurement of potential differences take place at the same electrode.

13. Method according to the previous claim 12,
**characterised by**
the use of electrodes in the form of an electrode spike with electrically decoupled electrode surfaces for feeding in an electrical signal and measuring the potential difference.

14. Method according to one of the previous claims,
**characterised by**
the use of a high resistance source of power.

15. Method according to one of the previous claims,
**characterised in that**
at least two coils for excitation of the sample are brought into contact with it.

16. Method according to one of the previous claims,
**characterised in that**
at least one magnetic field sensor for measuring magnetic field strengths is brought into contact with the sample.

17. Method according to one of the previous claims,
**characterised in that**
electrical excitation signals are applied to at least a part of the coils or excitation electrodes, through which a current density distribution and stemming from this magnetic field strength distribution is produced within the sample due to conductivity distribution.

18. Method according to one of the previous claims,
**characterised in that**
through the coils or the excitation electrodes the electrical signals are simultaneously fed into the sample to be examined and an allocation of the measured magnetic field strength distributions takes place in proportion to the electrical signals fed in.

19. Method according to one of the previous claims
**characterised in that**
at least two electrodes for measuring a potential difference and at least one magnetic field sensor for measuring a magnetic field strength are used.

20. Method according to one of the previous claims,
**characterised in that**
at least three electrodes for excitation of the sample and at least one magnetic field sensor for measuring magnetic field strength are brought into contact with the sample.

21. Method according to one of the previous claims,
**characterised in that**
the electrical signals are fed into the sample as alternating currents.

22. Method according to one of the previous claims,
**characterised in that**
the electrical signals are fed into the sample as alternating voltages and the current strengths are measured in the leads, which lead to the sample.

23. Device for fast tomographic measurement of conductivity distribution within a sample with a first means (A, B, C, D) for feeding electrical excitation signals into the sample and a second means (E, F) for measuring the potential differences and/or magnetic field strengths resulting from the feeding in of electrical signals and
further means for simultaneous feeding of electrical signals into the sample, which allow an allocation of the measured potential differences and/or magnetic field strengths in proportion to the electrical excitation signals fed in,
**characterised in that**
as a further means a control and calculation unit (S) produces electrical orthogonal excitation signals and makes it possible to allocate the measured potential differences and/or magnetic field strengths in proportion to the electrical orthogonal signals fed in at the same time.

24. Device according to claim 23,
comprising
at least two generators as part of a control and calculation unit S for producing orthogonal electrical excitation signals.

25. Device according to one of claims 23 to 24,
**characterised by**
leads, which carry the electrical excitation signals produced to the sample.

26. Device according to one of the previous claims 23 to 25,
comprising an evaluation unit for calculating conductivity distribution within the sample.

27. Device according to one of claims 23 to 26,
**characterised in that**
at least three electrodes are provided as a first means for feeding electrical signals into the sample.

28. Device according to one of claims 23 to 27,
**characterised in that**

at least two electrodes are provided as a second means for measuring electromagnetic fields.

29. Device according to one of claims 23 to 28,
**characterised in that**
at least three electrodes are provided as a first means for feeding electrical excitation signals into the sample, which are made so that measurement of potential differences takes place at these electrodes at the same time.

30. Device according to claim 29,
comprising
electrodes with electrically decoupled electrode surfaces in the form of an electrode spike, in which the electrode spike has a point and a cover.

31. Device according to one of claims 23 to 30,
comprising
at least two coils as a sole first means for feeding electrical signals into the sample or available in addition to the excitation electrodes.

32. Device according to one of claims 23 to 31,
comprising
at least one magnetic field sensor as a sole second means for measuring magnetic field strength or available in addition to the electrodes.

33. Device according to one of claims 23 to 32,
**characterised by**
a separation stage T, which breaks down the measured signals into proportionate signals allocated to the excitation signals.

**Revendications**

1. Procédé pour la mesure tomographique rapide de la distribution de conductivité dans un échantillon au moyen de l'alimentation de signaux d'excitation électriques dans l'échantillon, dans lequel
les signaux d'excitation électriques sont alimentés simultanément, et une attribution des différences de potentiel mesurées et/ou des forces de champ magnétique mesurées s'effectue proportionnellement aux signaux d'excitation électriques alimentés,
**caractérisé en ce que** les signaux électriques sont alimentés simultanément comme des signaux orthogonaux dans l'échantillon.

2. Procédé selon la revendication 1, **caractérisé en ce que** les signaux électriques sont alimentés comme des signaux sinusoïdaux orthogonaux dans l'échantillon.

3. Procédé selon l'une quelconque des revendications précédentes, **caractérisé en ce que** des parts de tension $a_i$ sont calculées par les équations conditionnelles des coefficients de Fourier (parts cosinusoïdales) selon la formule

$$a_i = \frac{2}{T} \int_0^T U_G(t) \cos(i\omega_0 t) dt ,$$

où $a_i$ = valeurs de crête des amplitudes de tension de mesure proportionnelles ; $\omega_0$ = fréquence de cercle de base des signaux d'excitation alimentés ; $i$ = indice du signal d'excitation de 1 à $\infty$ ; $U_g$ = différence de potentiel mesurée ; $t$ = temps.

4. Procédé selon l'une quelconque des revendications précédentes, **caractérisé en ce que** les parts de tension $b_i$ sont calculées par les équations conditionnelles des coefficients de Fourier (parts sinusoïdales) selon la formule

$$b_i \;=\; \frac{2}{T}\int_0^T U_G(t)\,\sin(i\omega_0 t)\,dt\,,$$

où $b_i$ = valeurs de crête de l'amplitude de tension de mesure proportionnelle déphasée de 90° ; $\omega_0$ = fréquence de cercle de base des signaux d'excitation alimentés ; i = indice du signal d'excitation de 1 à ∞ ; $U_g$ = différence de potentiel mesurée ; t = temps.

**5.** Procédé selon l'une quelconque des revendications précédentes, **caractérisé en ce que** l'on fait appel aux coefficients $a_i$ (part cosinusoïdale) et $b_i$ (part sinusoïdale) pour calculer l'impédance complexe de l'échantillon.

**6.** Procédé selon l'une quelconque des revendications précédentes, **caractérisé en ce que** les signaux électriques sont alimentés dans l'échantillon comme des signaux codés de façon orthogonale.

**7.** Procédé selon l'une quelconque des revendications précédentes, **caractérisé en ce que** les signaux peuvent adopter seulement deux amplitudes possibles.

**8.** Procédé selon l'une quelconque des revendications précédentes, **caractérisé en ce qu'**au moins trois électrodes sont amenées en contact avec l'échantillon en vue de l'excitation de celui-ci.

**9.** Procédé selon l'une quelconque des revendications précédentes, **caractérisé en ce qu'**au moins deux électrodes sont mises en contact avec l'échantillon pour mesurer des différences de potentiel.

**10.** Procédé selon l'une quelconque des revendications précédentes 8 à 9, **caractérisé en ce que** des signaux d'excitation électriques sont appliqués à au moins une partie desdites au moins trois électrodes pour l'excitation de l'échantillon, de sorte qu'une distribution de potentiel se crée dans l'échantillon qui est mesurée sur lesdites au moins deux électrodes pour la mesure des différences de potentiel.

**11.** Procédé selon l'une quelconque des revendications 8 à 10, **caractérisé en ce que** les signaux électriques sont alimentés simultanément par l'intermédiaire des électrodes pour l'alimentation dans l'échantillon à examiner et une attribution des différences de potentiel mesurées s'effectue proportionnellement aux signaux d'excitation électriques alimentés.

**12.** Procédé selon l'une quelconque des revendications précédentes, **caractérisé en ce que** l'alimentation de signaux d'excitation électriques et la mesure de la différence de potentiel ont lieu au niveau de la même électrode.

**13.** Procédé selon la revendication précédente 12, **caractérisé par** l'utilisation d'électrodes sous la forme d'une barrette d'électrodes avec des surfaces d'électrode découplées électriquement pour alimenter un signal électrique et pour mesurer la différence de potentiel.

**14.** Procédé selon l'une quelconque des revendications précédentes, **caractérisé par** l'utilisation d'une source de courant à haute impédance.

**15.** Procédé selon l'une quelconque des revendications précédentes, **caractérisé en ce qu'**au moins deux bobines sont amenées en contact avec l'échantillon pour l'excitation de celui-ci.

**16.** Procédé selon l'une quelconque des revendications précédentes, **caractérisé en ce qu'**au moins un capteur de champ magnétique est amené en contact avec l'échantillon pour mesurer des forces de champ magnétique.

**17.** Procédé selon l'une quelconque des revendications précédentes, **caractérisé en ce que** des signaux d'excitation électriques sont appliqués au moins à une partie des bobines ou électrodes d'excitation, de manière à ce que dans l'échantillon, il se crée une distribution de densité de courant, et donc une distribution de force de champ magnétique, en raison de la distribution de conductivité.

**18.** Procédé selon l'une quelconque des revendications précédentes, **caractérisé en ce que** les signaux électriques sont alimentés simultanément par l'intermédiaire des bobines ou par l'intermédiaire des électrodes d'excitation dans l'échantillon à examiner et **en ce qu'**une attribution des distributions de force de champ magnétique mesurées s'effectue proportionnellement aux signaux électriques alimentés.

19. Procédé selon l'une quelconque des revendications précédentes, **caractérisé en ce qu'**au moins deux électrodes sont utilisées pour mesurer une différence de potentiel et au moins un capteur de champ magnétique pour mesurer une force de champ magnétique.

20. Procédé selon l'une quelconque des revendications précédentes, **caractérisé en ce qu'**au moins trois électrodes sont amenées en contact avec l'échantillon pour exciter l'échantillon et au moins un capteur de champ magnétique est amené en contact avec l'échantillon pour mesurer une force de champ magnétique.

21. Procédé selon l'une quelconque des revendications précédentes, **caractérisé en ce que** les signaux électriques sont alimentés dans l'échantillon sous forme de courants alternatifs.

22. Procédé selon l'une quelconque des revendications précédentes, **caractérisé en ce que** les signaux électriques sont alimentés dans l'échantillon sous forme de tensions alternatives et **en ce que** les intensités de courant sont mesurées dans les lignes amenées allant jusqu'à l'échantillon.

23. Dispositif pour la mesure tomographique rapide de la distribution de conductivité dans un échantillon, comprenant des premiers moyens (A, B, C, D) pour alimenter des signaux d'excitation électriques dans l'échantillon, ainsi que des deuxièmes moyens (E, F) pour mesurer les différences de potentiel et/ou les forces de champ magnétique résultant de l'alimentation de signaux électriques, ainsi que d'autres moyens pour l'alimentation simultanée des signaux électriques dans l'échantillon qui permettent une attribution des différences de potentiel mesurées et/ou des forces de champ magnétique proportionnellement aux signaux d'excitation électriques alimentés, **caractérisé en ce qu'**une unité de commande et de calcul (S) génère comme autres moyens des signaux d'excitation orthogonaux électriques et permet une attribution des différences de potentiel mesurées et/ou des forces de champ magnétique proportionnellement aux signaux orthogonaux électriques alimentés simultanément.

24. Dispositif selon la revendication 23, comprenant au moins deux générateurs comme une partie d'une unité de commande et de calcul (S) pour la génération de signaux d'excitation électriques orthogonaux.

25. Dispositif selon l'une quelconque des revendications 23 et 24, **caractérisé par** des lignes d'amenée qui conduisent les signaux d'excitation électriques générés jusqu'à l'échantillon.

26. Dispositif selon l'une quelconque des revendications précédentes 23 à 25, comprenant une unité d'évaluation pour le calcul de la distribution de conductivité dans l'échantillon.

27. Dispositif selon l'une quelconque des revendications 23 à 26, **caractérisé en ce que** comme premiers moyens pour l'alimentation de signaux électriques dans l'échantillon, au moins trois électrodes sont prévues.

28. Dispositif selon l'une quelconque des revendications 23 à 27, **caractérisé en ce que** comme deuxièmes moyens pour mesurer les champs électromagnétiques, au moins deux électrodes sont prévues.

29. Dispositif selon l'une quelconque des revendications 23 à 28, **caractérisé en ce que** comme premiers moyens pour l'alimentation de signaux d'excitation électriques dans l'échantillon, au moins trois électrodes sont prévues qui sont configurées de telle sorte qu'au niveau de ces électrodes, la mesure de différences de potentiel est effectuée simultanément.

30. Dispositif selon la revendication 29, comprenant des électrodes avec des surfaces d'électrode découplées électriquement sous la forme d'une barrette d'électrodes, dans lequel la barrette d'électrodes présente une pointe et une enveloppe.

31. Dispositif selon l'une quelconque des revendications 23 à 30, comprenant au moins deux bobines en tant que premiers moyens, seuls ou en plus des électrodes d'excitation, pour l'alimentation de signaux électriques dans l'échantillon.

32. Dispositif selon l'une quelconque des revendications 23 à 31, comprenant au moins un capteur de champ magnétique en tant que deuxièmes moyens, seuls ou en plus des électrodes, pour la mesure d'une force de champ magnétique.

**33.** Dispositif selon l'une quelconque des revendications 23 à 32, **caractérisé par** un étage de séparation T qui décompose les signaux mesurés en signaux proportionnels attribués aux signaux d'excitation.

Fig. 1

Fig. 2

Fig. 3

Fig. 4

Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19837828

- US 5588429 A

**In der Beschreibung aufgeführte Nicht-Patentliteratur**

- **CHENEY, M. ; ISAACSON, D. ; NEWELL, J.C.** Electrical impedance tomography. *SIAM Review,* 1999, vol. 41, 85-101